# EUROPEAN PATENT SPECIFICATION

(11) **EP 4 485 169 B1**
(45) Date of publication and mention of the grant of the patent: **01.04.2026**
(21) Application number: 24165812.9
(22) Date of filing: 25.03.2024
(51) Int. Cl.: G06F 7/527, G06F 7/53, G06F 7/533, G06F 7/544

(54) **SYSTEMS AND METHODS FOR PERFORMING DOUBLE PRECISION HIGH-SPEED ARITHMETIC OPERATION**
SYSTEME UND VERFAHREN ZUR DURCHFÜHRUNG EINER HOCHGESCHWINDIGKEITSARITHMETIKOPERATION MIT DOPPELTER GENAUIGKEIT
SYSTÈMES ET PROCÉDÉS POUR EFFECTUER UNE OPÉRATION ARITHMÉTIQUE À GRANDE VITESSE À DOUBLE PRÉCISION

(30) Priority: 29.06.2023 IN 202341043724
(43) Date of publication of application: 01.01.2025
(73) Proprietor: Samsung Electronics Co., Ltd., Suwon-si, Gyeonggi-do 16677 (KR)
(72) Inventor: KATYARMAL, Ganesh Prabhakar, 560048 Bengaluru (IN); SHARMA, Amit, 560048 Bengaluru (IN); JANGID, Puneet, 560048 Bengaluru (IN); GHOSH, Subhankar, 560048 Bengaluru (IN)
(74) Representative: Marks & Clerk LLP

(56) References cited:
- WO-A1-2021/067331
- JP-A- H01 237 766
- SAI KUMAR ARURU ET AL: "Design of High Speed 8-bit Vedic Multiplier using Brent Kung Adders", 2022 13TH INTERNATIONAL CONFERENCE ON COMPUTING COMMUNICATION AND NETWORKING TECHNOLOGIES (ICCCNT), IEEE, 3 October 2022 (2022-10-03), pages 1 - 5, XP034257729, DOI: 10.1109/ICCCNT54827.2022.9984591

## Description

### TECHNICAL FIELD

Embodiments of the present invention are directed to the field of integrated circuits for video processing, and more specifically relate to systems and methods for performing a double-precision high-speed arithmetic operation for an integrated circuit.

### DISCUSSION OF THE RELATED ART

As more media content, such as ultra-high definition (8K) videos, is being digitally generated, the technology for rendering these videos needs to be improved.

During video processing of ultra-high definition (8K) videos that have a high frame rate (144 Hz), the multiplication operation is the most time consuming and crucial operation for a high-performance Application Specific Integrated Circuit (ASIC) used for video processing. In particular, meeting the timing requirements for 64bit x 32bit multiplication operation at 1400MHz is challenging. Further, the conventional components involved in performing the multiplication operation fail to meet the timing requirements. In addition, the conventional components involved in performing complex multiplication operations result in inconclusive errors when combined with other operations performed during video processing.

It is known in the art JP H01 237766; the IEEE 754 double multiply.

### SUMMARY

According to an embodiment of the present disclosure, a method for performing a double-precision high-speed arithmetic operation for an integrated circuit includes receiving, from one or more register circuits, first input data and second input data. The first input data includes a first plurality of bits, and the second input data includes a second plurality of bits. The method also includes generating first output data by performing a first logical operation on each of the received first input data and second input data, where the first output data includes a plurality of dot products of the first plurality of bits and the second plurality of bits. The method further includes arranging the plurality of dot products in a row-wise manner. Furthermore, the method includes generating second output data by performing a first arithmetic operation on the plurality of row-wise arranged dot products. The second output data includes a plurality of bit elements. Moreover, the method includes performing a transpose operation on the plurality of bit elements of the second output data by arranging least significant bits (LSBs) of the plurality of bit elements and most significant bits (MSBs) of the plurality of bit elements in successive rows in a predefined manner. The method also includes generating final output data by performing a second arithmetic operation on the transposed plurality of bit elements.

According to another embodiment of the present disclosure, a system for performing a double precision high-speed arithmetic operation for an integrated circuit includes one or more register circuits that generate first input data and second input data. The first input data includes a first plurality of bits, and the second input data includes a second plurality of bits. The system also includes a first logical circuit that generates first output data by performing a first logical operation on each of the received first input data and second input data. The first output data includes a plurality of dot products of the first plurality of bits and the second plurality of bits. The first logical circuit also arranges the plurality of dot products in a row-wise manner. The system further includes a first computation circuit that generates second output data by performing a first arithmetic operation on the plurality of row-wise arranged dot products. The second output data includes a plurality of bit elements. The system also includes a transpose circuit that performs a transpose operation on the plurality of bit elements of the second output data by arranging least significant bits (LSBs) of the plurality of bit elements and most significant bits (MSBs) of the plurality of bit elements in successive rows in a predefined manner. Moreover, the system includes a second computation circuit that generates final output data by performing a second arithmetic operation on the transposed plurality of bit elements.

According to another embodiment of the present disclosure, there is provided a non-transitory program storage device readable by a computer, tangibly embodying a program of instructions executed by the computer to perform a method for performing a double precision high-speed arithmetic operation in an integrated circuit.

At least some of the above and other features of the invention are set out in the claims.

### BRIEF DESCRIPTION OF THE DRAWINGS

**FIG. 1** is a schematic block diagram of an environment for video enhancement and display processing, according to an embodiment of the present disclosure.
**FIG. 2** is a block diagram of a system that performs a double precision high-speed arithmetic operation in an integrated circuit, according to an embodiment of the present disclosure.
**FIG. 3** illustrates a process flow of a multiplication process for video enhancement, according to an embodiment of the present disclosure.
**FIG. 4** illustrates a process flow of a multiplication process for video enhancement, according to another embodiment of the present disclosure.
**FIG. 5** is a flow chart of a method for performing a double precision high-speed arithmetic operation for an integrated circuit, according to an embodiment of the present disclosure.

### DETAILED DESCRIPTION

Embodiments of the present disclosure provide an enhanced video processing method that performs complex multiplication operations in a desired time period. A video processing method includes performing a double-precision high-speed arithmetic operation using an integrated circuit. For example, embodiments of the present disclosure provide an enhanced video processing method that performs multiplication operations for an integrated circuit that supports the conversion of high-resolution videos.

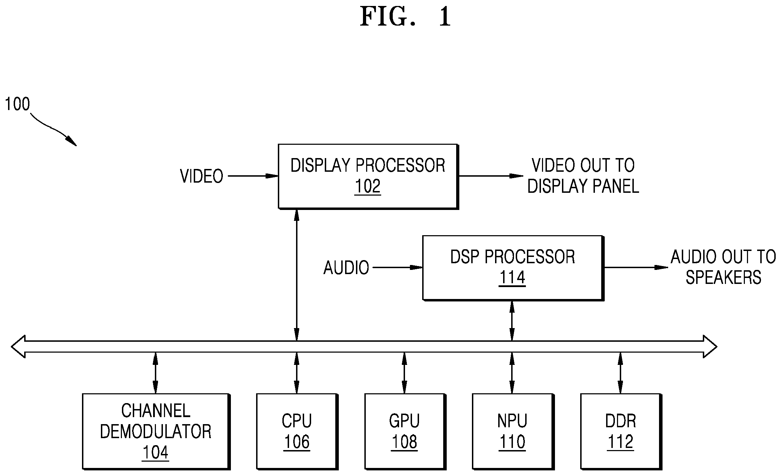

**FIG. 1** is a schematic block diagram of an environment (e.g. a system) 100 for video enhancement and display processing, according to an embodiment of the present disclosure.

The system environment 100 includes a display processor 102, a channel demodulator 104, a Central Processing Unit (CPU) 106, a Graphical Processing Unit (GPU) 108, a Neural Processing Unit (NPU) 110, a Double Data Rate (DDR) memory 112, and a Digital Signal Processor (DSP) 114.

According to FIG. 1, the display processor 102 processes the received video signal and displays the processed video stream to a display device. Note that simplicity of illustration, the display device and/or display panel are not shown in FIG. 1.

The display processor 102 can reduce noise and/or artifacts in the received video signals. In an embodiment, the display processor 102 implements various techniques such as, but not limited to, spatial filtering, temporal filtering, and wavelet-based denoising, to reduce unwanted noise and/or artifacts in the received video signals/image frames. The video signals/image frames may be signals obtained from one or more cameras and may represent one or more real-world environments. For example, the display processor 102 can effectively restore compressed video signals or video signals received from a noisy channel.

The display processor 102 can also adjust and/or modify various characteristics of the video signal. Such characteristics include, but are not limited to, resolution, aspect ratio, etc. In an embodiment, the display processor 102 implements various techniques such as, but not limited to, interpolation, decimation, filtering, etc., to adjust and/or modify the characteristics of the video signal.

The display processor 102 can further process the received video signal to enhance the sharpness and clarity of the video signal and/or image frames of the video signal. In an embodiment, the display processor 102 utilizes various image processing techniques such as, but not limited to, contrast enhancement, edge enhancement, and noise reduction, to reduce the noise in the video signal and add more clarity. In addition, the display processor 102 can implement various techniques such as, but not limited to, noise reduction, motion smoothing, color correction, contrast enhancement, etc., to improve the quality of the received video signal. For example, the display processor 102 can enhance the resolution of information in the received video signal to highlight details and increase the sharpness of the information.

In some embodiments, the display processor 102 can also adjust High Dynamic Range (HDR) values of the video signals and/or the image frames of the video signals in view of the display device.

The display processor 102 can also adjust the number of frames displayed per second. For example, the display processor 102 can synchronize a frame rate of the information being displayed over the display device with a refresh rate of the display device. Thus, the display processor 102 can eliminate various display issues such as, but not limited to, stuttering, jerky motion, tearing, etc.

Further, the display processor 102 can extend the resolution and/or refresh rate of the video signal. In an embodiment, the display processor 102 converts a lower resolution and/or refresh rate video signal into a higher resolution and/or refresh rate. Therefore, the display processor 102 improves the visual quality of the information in the video signal and eliminates resolution loss or distortion.

In an embodiment, to adjust and/or modify various characteristics/parameters of the video signal, the display processor 102 performs various arithmetic and/or logical operations. For example, the display processor 102 performs multiplication operations. The multiplication operation adjusts the overall brightness or contrast of the video signal and/or the image frames of the video signal. Further, in some embodiments, the multiplication operation is used to adjust a HDR value to a Low Dynamic Range (LDR) value. For example, if the HDR values of the image frame are too bright for an LDR display device, the multiplication operation is used to reduce the brightness by a certain factor, such as 0.3. The multiplication by the factor of 0.3 reduces the brightness of the image frame while preserving the details of the image frame.

The multiplication operation is also used to adjust the contrast of the image frame. A high-contrast image has a high brightness differences between dark and light areas of the image frame and a low-contrast image has lower brightness differences. Therefore, by adjusting the multiplication factor, the display processor 102 can adjust the contrast of the image frame.

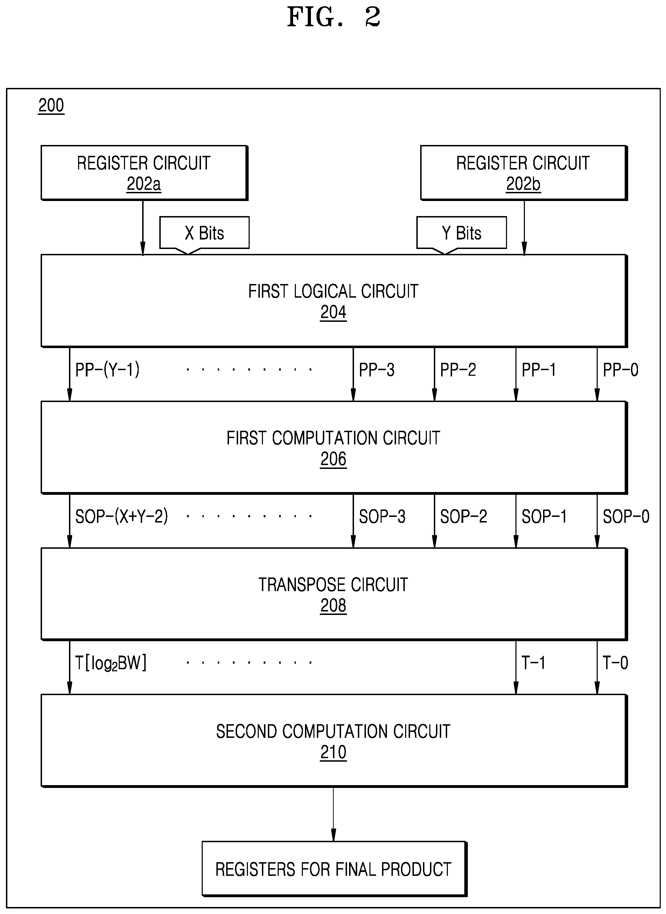

In an embodiment, the display processor 102 includes an integrated circuit that performs a double precision high-speed arithmetic operation to achieve the desired objective. The operation of the integrated circuit of the display processor 102 is described in detail with reference to FIGs. 2 through 5.

The display processor 102 displays the processed video signal by using the display device. That is, the display processor 102 is configured to control the display device to display the processed video signal.

FIG. 1 also illustrates the channel demodulator 104, and various processing units such as the CPU 106, the GPU 108, the NPU 110, the DDR memory 112, and the DSP 114, which are generic in nature and perform conventionally known functions. Accordingly, a detailed description of these components has been omitted for the sake of brevity.

Embodiments are examples of particular implementations and an integrated circuit that performs a double precision high-speed arithmetic operation can be implemented in any suitable technology area. Accordingly, the double precision high-speed arithmetic operations described herein are not limited to application within the context of image processing.

**FIG. 2** is a block diagram of a system 200 that performs a double precision high-speed arithmetic operation in an integrated circuit, according to an embodiment of the present disclosure. In an embodiment, the system 200 corresponds to an integrated circuit (IC) and/or a device for double precision high-speed arithmetic operation.

The system 200 includes register circuit(s) 202a, and 202b, interchangeably referred to as "the register circuits 202". The register circuits 202 generate first input data and second input data based on the received information and/or signal. In an embodiment, the information and/or signal received by the register circuits 202 corresponds to the video signals and/or the image frames in the video signals received by the display processor 102 shown in FIG. 1. Further, the first input data and the second input data correspond to pixel information of the video signals and the image frames in the video signals. In one embodiment, the first input data corresponds to pixel information (e.g. of video or image data) and the second information corresponds to a multiplication factor (e.g. for use in adjusting pixel values, such as to increase or decrease brightness or contrast in the video or image data). The pixel information may be from video or image data captured by one or more cameras and representing a real-world environment. Further, the first input data includes a first plurality of bits and the second input data includes a second plurality of bits.

In an embodiment, the arithmetic operation performed by the system 200 corresponds to a multiplication operation, the first input data corresponds to a multiplicand and the second input data corresponds to a multiplier.

The system 200 also includes a first logical circuit 204. The first logical circuit 204 receives the first input data and the second input data. The first logical circuit 204 generates first output data by performing a first logical operation on each of the received first input data and the second input data. In an embodiment, the first logical operation is a bitwise AND operation and the first logical circuit 204 performs the bitwise AND operation on each bit of the first input data and the second input data. In an embodiment, the first logical circuit 204 performs the bitwise AND operation on each bit of the first input data and the second input data to generate the first output data. Moreover, the first output data includes a plurality of dot products of the first plurality of bits that correspond to the first input data and the second plurality of bits that correspond to the second input data. In an embodiment, the first output data may be referred to as Partial Products (PP-0 to PP-(Y-1)). Further, the first logical circuit 204 arranges the plurality of dot products in a row-wise manner. As discussed herein, arranging data "in a row-wise manner" may comprise arranging the data in one or more rows (e.g. as opposed to arranging the data in one or more columns). Each entry may correspond to a row. In the context of a plurality of partial products, each partial product may be arranged in a corresponding row. In an embodiment, the first logical circuit 204 corresponds to a Gate circuit that implements the bitwise AND operation.

The system 200 also includes a first computation circuit 206. The first computation circuit 206 performs a first arithmetic operation on the plurality of row-wise arranged dot products to generate second output data. In an embodiment, the first arithmetic operation corresponds to an addition operation, and the first computation circuit 206 performs the addition operation on the plurality of row-wise arranged dot products and each of the plurality of bit elements is generated as an addition of the corresponding plurality of dot products. Further, the second output data includes a plurality of bit elements and each of the plurality of bit elements is generated as an addition of the corresponding plurality of dot products. In an embodiment, the first computation circuit 206 may also be referred to as a column adder circuit that implements an addition operation. Further, the second output data may be referred to as Sum of Partial Products (SOP-0 to SOP-(X+Y-2)).

The system 200 further includes a transpose circuit 208. The transpose circuit 208 performs a transpose operation on the plurality of bit elements of the second output data by arranging least significant bits (LSBs) of the plurality of bit elements and most significant bits (MSBs) of the plurality of bit elements in successive rows in a predefined manner. For example, the transpose circuit 208 rearranges the second output data and/or the sum of partial products. In an embodiment, the transpose circuit 208 generates a row of the sum of partial products by arranging the bit elements from the LSBs to the MSBs. Further, for each successive row, the transpose circuit 208 left shifts the plurality of bit elements of the second output data. After performing the transpose operation, the transpose circuit 208 generates the transposed plurality of bit elements. The transposed plurality of bit elements may be referred to as the transposed sum of partial products (T[0] to T[log₂BW]).

The system 200 further includes a second computation circuit 210. The second computation circuit 210 performs a second arithmetic operation on the transposed plurality of bit elements to generate the final output data. In an embodiment, the second arithmetic operation is an addition operation and the second computation circuit 210 simultaneously performs the addition operation on the corresponding transposed plurality of bit elements. In an embodiment, the final output data is a multiplication product of the first input data and the second input data. Further, the system 200 includes one or more register circuits that receive the final result and/or product.

In an embodiment, the first input data includes X number of bits and the second input data includes Y number of bits, where X does not necessarily equal Y. Further, the number of bits (Y) of the second input data may also be referred as the Bit width (BW). The first logical circuit 204 performs the bitwise AND operation on the first input data and the second input data to generate Y number of partial products. Further, each of the Y number of partial products includes X number of bit elements. For example, the number of partial products is equal to BW. Further, the first logical circuit 204 arranges the Y number of partial products in a row-wise manner and generates Y rows of partial products.

The first computation circuit 206 adds each column of the Y-number of partial products to generate (X+Y-1)-number of sum of partial products. The generated sum of partial products may be represented as PP_SUM. Further, the transpose circuit 208 transposes the generated sum of partial products in a row-wise manner such that each row includes the (X+Y-1)-number of bit elements. In an embodiment, the partial product sum has a maximum value that equates to BW. Therefore, the first computation circuit 206 requires log2(BW)+1 bit to represent BW for the partial product sum. Accordingly, after the transpose operation by the transpose circuit 208, the T0 to T[log2(BW)] values are obtained. The second computation circuit 210 adds each of the T[log2(BW)] + 1 number of transposed sum of partial products in parallel to generate a result of multiplication of the first input data and the second input data.

For example, if BW has 4 bits, the number of partial products will be 4. Further, the sum of partial products is less than or equal to 4. Further, since 3 bits are required to store the number 4, 3 rows are generated to represent PP_SUM. Further, 3 rows correspond to T0 to T[log2(4)] values from the transpose circuit 208.

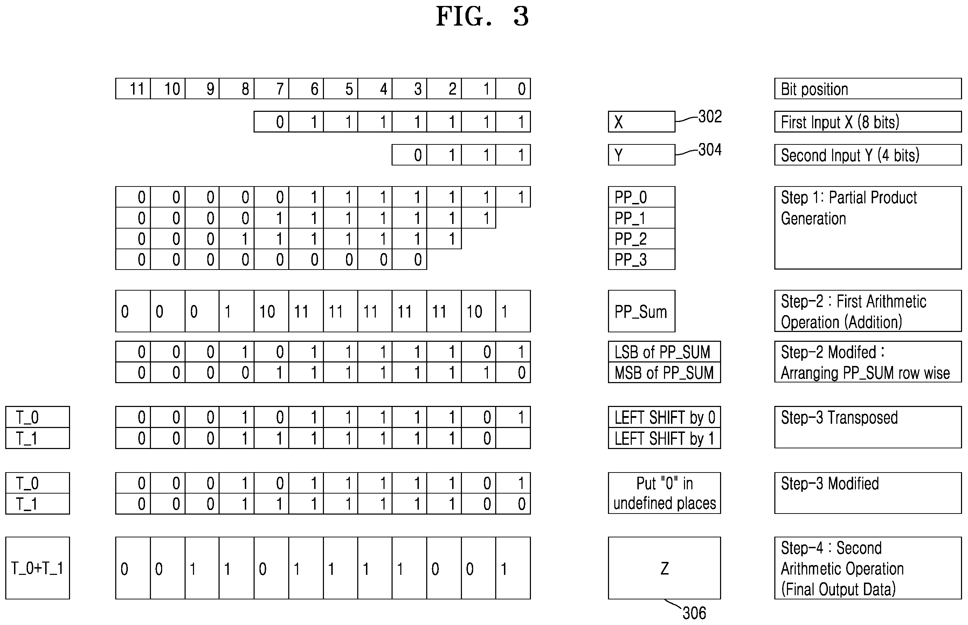

**FIG. 3** illustrates a process flow for a multiplication process for video enhancement, according to an embodiment of the present disclosure.

For example, FIG. 3 illustrates the multiplication of first input data 302 and second input data 304, according to an embodiment of the present disclosure. The first input data 302 may be referred to as a multiplicand and the second input data 304 may be referred to as a multiplier. Further, the first input data 302 includes 8 bits positioned at index locations 0-7, and the second input data 304 includes 4 bits positioned at index locations 0-3. In an embodiment, the first input data 302 equates to value 127 in decimal format, and the second input data 304 equates to value 7 in decimal format. It will be appreciated that the specific values and lengths of the first input data 302 and second input data 304 are examples, and any values or lengths for the first input data 302 and second input data 304 may be used.

At step 1, the first logical circuit 204 generates partial products of the first input data 302 and the second input data 304. The first input data 302 is multiplied by each unit of the multiplier individually to produce the partial products. Each partial product represents the multiplication of the first input data 302 with a corresponding bit of the second input data 304. Since the second input data 304 includes 4 bits, the first logical circuit 204 generates 4 partial products that are represented as PP_0, PP_1, PP_2, and PP_3, and that have been arranged in row-wise, as shown in FIG. 3. In an embodiment, the first logical circuit 204 generates the partial products PP_0 to PP_3 by performing a dot product operation on the first input data 302 and the second input data 304. In another embodiment, the first logical circuit 204 generates the partial products PP_0 to PP_3 by performing Bitwise Logical AND operations on the first input data 302 and the second input data 304.

At step 2, the first computation circuit 206 generates a sum of the partial products by performing a column-wise addition of the partial products. The generated sum of partial products may be represented as PP_SUM. Accordingly, the combination of step 1 and step 2 completes a dot product between the first input data 302 and the second input data 304. The first computation circuit 206 also modifies the generated sum of partial products by separating the LSBs and the MSBs of the sum of partial products in separate rows. The LSBs may be a predefined number of the least significant (e.g. right-most) bits in the sum of partial products. The MSBs may be a predefined number of the most significant (e.g. left-most) bits in the sum of partial products. The LSBs may be the least significant half of the bits, and the MSBs may be the most significant half of the bits.

At step 3, the transpose circuit 208 rearranges the row-wise data that includes the LSBs and MSBs of the sum of partial products in a predefined manner, which is referred as the transpose operation. For example, the transpose circuit 208 arranges the LSBs to MSBs in successive rows and left shifts each successive row by 1 more from the previous row. "0" is placed in any undefined places (e.g. the right-most bit(s) following left-shifting). The modified sum of partial products that is generated by the transpose circuit 208 may also be represented as "T_0" and "T_1".

At step 4, the second computation circuit 210 adds two terms of the modified sum of partial products ("T_0" and "T_1") to generate the product 306 of the first input data 302 and the second input data 304. The product 306 may also be represented by the character "Z" that includes 12 bits and equates to a value of 889 in the decimal format. Z is the result of the multiplication of the the first input data 302 (in this case 127) with the second input data 304 (in this case 7).

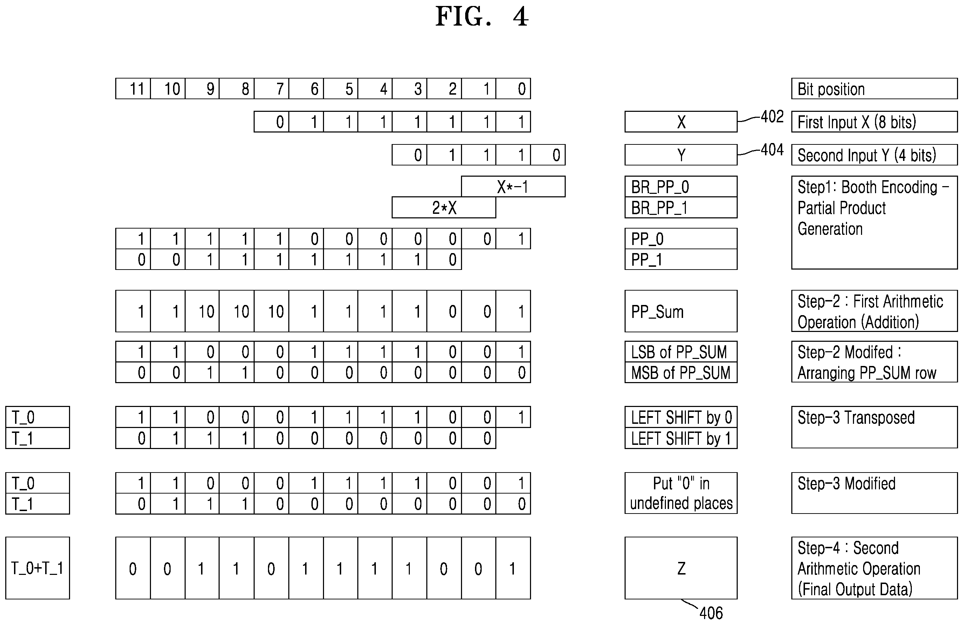

**FIG. 4** illustrates a process flow for a multiplication process for video enhancement, according to another embodiment of the present disclosure.

For example, FIG. 4 illustrates the multiplication of first input data 402 and second input data 404, according to an embodiment of the present disclosure. The first input data 402 may be referred to as a multiplicand and the second input data 404 may be referred to as a multiplier. Further, the first input data 402 includes 8 bits positioned at index locations 0-7 and the second input data 404 includes 4 bits positioned at index locations 0-3. Initially, the system 200 performs Booth encoding of the second input data to generate two bits that correspond to the second input data 404. Booth encoding involves encoding (or recoding) the multiplier (in this case, the second input data 404) to an encoded (or recoded) value, wherein each digit of the multiplier can assume negative, positive and zero values. Booth encoding allows for faster multiplication of binary integers in 2's complement representation.

At step 1, the first logical circuit 204 generates partial products of the first input data 402 and the second input data 404. In an embodiment, the logical circuit 204 implements a Booth encoding technique that generates the partial products. The partial products generated by the first logical circuit 204 are represented as PP_0 and PP_1 that have been arranged row-wise. In an embodiment, the partial products PP_0 and PP_1 are generated using Booth encoding techniques for the bits of the second input data (i.e., multiplier) as per the Booth-encoding radix-4 rule (BR_PP_0 and BR_PP_1).

Further, the steps 2-4 are similar to steps 2-4, as described with reference to FIG. 3, therefore a description of these steps has been omitted for the sake of brevity. Further, the product 406 is obtained as a multiplication result from the first input data 402 and the second input data 404, according to an embodiment of the present disclosure.

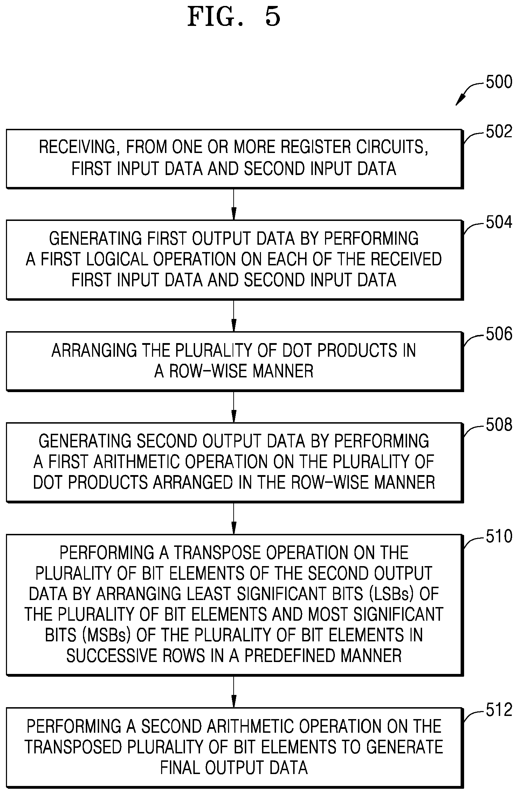

FIG. 5 is a flow chart of a method 500 for performing a double precision high-speed arithmetic operation in an integrated circuit, according to an embodiment of the present disclosure.

Referring to FIG. 5, in an embodiment, at step 502, the method 500 includes receiving first input data and second input data from the one or more register circuits 202a, 202b. The first input data includes a first plurality of bits, and the second input data includes a second plurality of bits.

At step 504, the method 500 includes generating first output data by performing a first logical operation on each of the received first input data and second input data. The first output data includes a plurality of dot products of the first plurality of bits and the second plurality of bits. The first logical operation is a bitwise AND operation, and the bitwise AND operation is performed on each bit of the first input data and the second input data.

At step 506, the method 500 includes arranging the plurality of dot products in a row-wise manner. At step 508, the method 500 includes generating second output data by performing a first arithmetic operation on the plurality of row-wise arranged dot products. The second output data includes a plurality of bit elements. In an embodiment, the first arithmetic operation is an addition operation performed on the plurality of row-wise arranged dot products. Further, each of the plurality of bit elements is generated by an addition of the corresponding plurality of dot products.

At step 510, the method 500 includes performing a transpose operation on the plurality of bit elements of the second output data by arranging least significant bits (LSBs) of the plurality of bit elements and most significant bits (MSBs) of the plurality of bit elements in successive rows in a predefined manner. Further, at step 512, the method 500 includes performing a second arithmetic operation on the transposed plurality of bit elements to generate final output data. In an embodiment, the second arithmetic operation is an addition operation that is simultaneously performed on the corresponding transposed plurality of bit elements. Further, the final output data is a multiplication product of the first input data and the second input data.

Embodiments as discussed above are non-limiting and are exmples of particular implementations. Accordingly, the method 500 may include additional steps or omit some of the above-mentioned steps to perform the desired objective of embodiments of the present disclosure. Further, the steps of the method 500 can be performed in any suitable order and/or by any suitable component of the system 300 to achieve the desired outcome.

Therefore, embodiments of the present disclosure provides various technical effects, including but not limited to, significantly reducing the number of steps required to perform the multiplication of the first input data and the second input data. By reducing the number of multiplication steps, embodiments of the present disclosure can support a high resolution (8k) and a high frame rate (144hz) video generation. Further, by reducing the number of steps, embodiments of the present disclosure reduce the latency of the system.

The drawings and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, orders of processes described herein may be changed and are not limited to the manner described herein.

## Claims

1. A method for performing a double precision high-speed arithmetic operation in an integrated circuit, comprising:
receiving, from one or more register circuits, first input data and second input data, wherein the first input data includes a first plurality of bits, and the second input data includes a second plurality of bits;
generating first output data by performing a first logical operation on each of the received first input data and second input data, wherein the first output data includes a plurality of dot products of the first plurality of bits and the second plurality of bits;
arranging the plurality of dot products in a row-wise manner;
generating second output data by performing a first arithmetic operation on the plurality of row-wise arranged dot products, wherein the second output data includes a plurality of bit elements;
performing a transpose operation on the plurality of bit elements of the second output data by arranging least significant bits, LSBs, of the plurality of bit elements and most significant bits, MSBs, of the plurality of bit elements in successive rows in a predefined manner; and
generating final output data by performing a second arithmetic operation on the transposed plurality of bit elements.

2. The method as claimed in claim 1,
wherein the first logical operation is a bitwise AND operation, and
wherein the bitwise AND operation is performed on each bit of the first input data and the second input data.

3. The method as claimed in claim 1 or claim 2,
wherein the first arithmetic operation is an addition operation performed on the plurality of row-wise arranged dot products, and
each of the plurality of bit elements is generated as an addition of the corresponding plurality of dot products.

4. The method as claimed in any preceding claim,
wherein the second arithmetic operation corresponds to an addition operation, and
wherein the addition operation is simultaneously performed on the corresponding transposed plurality of bit elements.

5. The method as claimed in any preceding claim, wherein the one or more register circuits generate first input data and second input data based on video signals and/or image frames in the video signals received by a display processor.

6. The method as claimed in any preceding claim, wherein generating first output data includes Booth encoding bits of the second input data.

7. A system for performing a double precision high-speed arithmetic operation for an integrated circuit, comprising:
one or more register circuits configured to generate first input data and second input data, wherein the first input data includes a first plurality of bits, and the second input data includes a second plurality of bits;
a first logical circuit configured to:
generate first output data by performing a first logical operation on each of the received first input data and second input data, wherein the first output data includes a plurality of dot products of the first plurality of bits and the second plurality of bits; and
arrange the plurality of dot products in a row-wise manner;
a first computation circuit configured to generate second output data by performing a first arithmetic operation on the plurality of row-wise arranged dot products, wherein the second output data includes a plurality of bit elements;
a transpose circuit configured to perform a transpose operation on the plurality of bit elements of the second output data by arranging least significant bits, LSBs, of the plurality of bit elements and most significant bits, MSBs, of the plurality of bit elements in successive rows in a predefined manner; and
a second computation circuit confiugured to generate final output data by performing a second arithmetic operation on the transposed plurality of bit elements.

8. The system as claimed in claim 7,
wherein the first logical operation is a bitwise AND operation, and
wherein the first logical circuit is configured to perform the bitwise AND operation on each bit of the first input data and the second input data.

9. The system as claimed in claim 7 or claim 8,
wherein the first arithmetic operation is an addition operation, and
wherein the first computation circuit is configured to perform the addition operation on the plurality of dot products arranged in the row-wise manner, and each of the plurality of bit elements is generated as an addition of the corresponding plurality of dot products.

10. The system as claimed in any of claims 7-9,
wherein the second arithmetic operation is an addition operation, and
wherein the second computation circuit is configured to simultaneously perform the addition operation on the corresponding transposed plurality of bit elements.

11. The system as claimed in any of claims 7-10, wherein the final output data is a multiplication product of the first input data and the second input data, and the system further includes one or more register circuits configured to receive the final output data.

12. The system as claimed in any of claims 7-11, wherein the first input data includes X number of bits, the second input data includes Y number of bits, the first logical circuit is configured to generate Y number of partial products from the first input data and the second input data, each of the Y number of partial products includes X number of bit elements, and the first computation circuit is configured to generate (X+Y-1)-number of sums of partial products by adding each column of the Y-number of partial products.

13. The system as claimed in any of claims 7-12, wherein the transpose circuit is configured to generate, for each successive row, a modified sum of partial products by left shifting the plurality of bit elements of the second output data by 1 more from a previous row, and place a "0" in an undefined place.

14. The system as claimed in claim 13, wherein the second computation circuit is configured to generate a product of the first input data and the second input data by adding two terms of the modified sum of partial products.

15. A non-transitory program storage device readable by a computer, tangibly embodying a program of instructions executed by the computer to perform a method for performing a double precision high-speed arithmetic operation in an integrated circuit, the method comprising:
receiving first input data and second input data, wherein the first input data includes a first plurality of bits, and the second input data includes a second plurality of bits;
generating first output data by performing a first logical operation on each of the received first input data and second input data, wherein the first output data includes a plurality of dot products of the first plurality of bits and the second plurality of bits;
arranging the plurality of dot products in a row-wise manner;
generating second output data by performing a first arithmetic operation on the plurality of row-wise arranged dot products, wherein the second output data includes a plurality of bit elements;
performing a transpose operation on the plurality of bit elements of the second output data by arranging least significant bits, LSBs, of the plurality of bit elements and most significant bits, MSBs, of the plurality of bit elements in successive rows in a predefined manner; and
generating final output data by performing a second arithmetic operation on the transposed plurality of bit elements.

## Patentansprüche

1. Verfahren zum Durchführen einer Hochgeschwindigkeitsarithmetik-Operation mit doppelter Genauigkeit in einer integrierten Schaltung, umfassend:
Empfangen von ersten Eingangsdaten und zweiten Eingangsdaten von einer oder mehreren Registerschaltungen, wobei die ersten Eingangsdaten eine erste Vielzahl von Bits beinhalten und die zweiten Eingangsdaten eine zweite Vielzahl von Bits beinhalten;
Erzeugen von ersten Ausgangsdaten durch Ausführen einer ersten logischen Operation auf jedem der empfangenen ersten Eingangsdaten und zweiten Eingangsdaten, wobei die ersten Ausgangsdaten eine Vielzahl von Skalarprodukten der ersten Vielzahl von Bits und der zweiten Vielzahl von Bits beinhalten;
zeilenweises Anordnen der Vielzahl von Skalarprodukten;
Erzeugen von zweiten Ausgangsdaten durch Ausführen einer ersten arithmetischen Operation auf der Vielzahl von zeilenweise angeordneten Skalarprodukten, wobei die zweiten Ausgangsdaten eine Vielzahl von Bit-Elementen beinhalten;
Durchführen einer Transpositionsoperation an der Vielzahl von Bit-Elementen der zweiten Ausgangsdaten, durch Anordnen die niedrigstwertigen Bits, LSBs, der Vielzahl von Bit-Elementen und der höchstwertigen Bits, MSBs, der Vielzahl von Bit-Elementen in aufeinanderfolgenden Zeilen in einer vordefinierten Weise; und
Erzeugen der endgültigen Ausgangsdaten durch Durchführen einer zweiten arithmetischen Operation auf die transponierte Vielzahl von Bit-Elementen.

2. Verfahren nach Anspruch 1,
wobei die erste logische Operation eine bitweise UND-Operation ist, und
wobei die bitweise UND-Operation auf jedes Bit der ersten Eingangsdaten und der zweiten Eingangsdaten durchgeführt wird.

3. Verfahren nach Anspruch 1 oder Anspruch 2,
wobei die erste arithmetische Operation eine Additionsoperation ist, die auf die Vielzahl von zeilenweise angeordneten Skalarprodukte durchgeführt wird, und
jedes der Vielzahl von Bit-Elemente als Addition der entsprechenden Vielzahl von Skalarprodukten erzeugt wird.

4. Verfahren nach einem vorstehenden Anspruch,
wobei die zweite arithmetische Operation einer Additionsoperation entspricht, und
wobei die Additionsoperation gleichzeitig auf die entsprechende transponierte Vielzahl von Bit-Elementen durchgeführt wird.

5. Verfahren nach einem vorstehenden Anspruch, wobei die eine oder mehreren Registerschaltungen erste Eingangsdaten und zweite Eingangsdaten basierend auf Videosignalen und/oder Einzelbildern in den Videosignalen erzeugen, die von einem Anzeigeprozessor empfangen werden.

6. Verfahren nach einem vorstehenden Anspruch, wobei Erzeugen erster Ausgangsdaten Booth-Codieren von Bits der zweiten Eingangsdaten beinhaltet.

7. System zum Durchführen einer Hochgeschwindigkeitsarithmetik-Operation mit doppelter Genauigkeit für eine integrierte Schaltung, umfassend:
eine oder mehrere Registerschaltungen, die konfiguriert sind, um erste Eingangsdaten und zweite Eingangsdaten zu erzeugen, wobei die ersten Eingangsdaten eine erste Vielzahl von Bits beinhalten und die zweiten Eingangsdaten eine zweite Vielzahl von Bits beinhalten;
eine erste logische Schaltung, die konfiguriert ist, um:
erste Ausgangsdaten durch Ausführen einer ersten logischen Operation auf jedem der empfangenen ersten Eingangsdaten und zweiten Eingangsdaten zu erzeugen, wobei die ersten Ausgangsdaten eine Vielzahl von Skalarprodukten der ersten Vielzahl von Bits und der zweiten Vielzahl von Bits beinhalten; und
die Vielzahl von Skalarprodukten zeilenweise anzuordnen;
eine erste Rechenschaltung, die konfiguriert ist, um zweite Ausgangsdaten durch Ausführen einer ersten arithmetischen Operation auf der Vielzahl von zeilenweise angeordneten Skalarprodukten zu erzeugen, wobei die zweiten Ausgangsdaten eine Vielzahl von Bit-Elementen beinhalten;
eine Transpositionsschaltung, die konfiguriert ist, um eine Transpositionsoperation an der Vielzahl von Bit-Elementen der zweiten Ausgangsdaten, durch Anordnen die niedrigstwertigen Bits, LSBs, der Vielzahl von Bit-Elementen und der höchstwertigen Bits, MSBs, der Vielzahl von Bit-Elementen in aufeinanderfolgenden Zeilen in einer vordefinierten Weise durchzuführen; und
eine zweite Rechenschaltung, die konfiguriert ist, um die endgültigen Ausgangsdaten durch Durchführen einer zweiten arithmetischen Operation auf die transponierte Vielzahl von Bit-Elementen zu erzeugen.

8. System nach Anspruch 7,
wobei die erste logische Operation eine bitweise UND-Operation ist, und
wobei die erste logische Schaltung konfiguriert ist, um die bitweise UND-Operation auf jedes Bit der ersten Eingangsdaten und der zweiten Eingangsdaten durchzuführen.

9. System nach Anspruch 7 oder Anspruch 8,
wobei die erste arithmetische Operation eine Additionsoperation ist, und
wobei die erste Rechenschaltung konfiguriert ist, um die Additionsoperation auf die Vielzahl von Skalarprodukten durchzuführen, die zeilenweise angeordnet sind, und jedes der Vielzahl von Bit-Elementen als Addition der entsprechenden Vielzahl von Skalarprodukten erzeugt wird.

10. System nach einem der Ansprüche 7-9,
wobei die zweite arithmetische Operation eine Additionsoperation ist, und
wobei die zweite Rechenschaltung konfiguriert ist, um gleichzeitig die Additionsoperation auf die entsprechende transponierte Vielzahl von Bit-Elementen durchzuführen.

11. System nach einem der Ansprüche 7-10, wobei die endgültigen Ausgangsdaten ein Multiplikationsprodukt der ersten Eingangsdaten und der zweiten Eingangsdaten sind, und das System weiter eine oder mehrere Registerschaltungen beinhaltet, die konfiguriert sind, um die endgültigen Ausgangsdaten zu empfangen.

12. System nach einem der Ansprüche 7-11, wobei die ersten Eingangsdaten X Bits beinhalten und die zweiten Eingangsdaten Y Bits beinhalten, die erste logische Schaltung konfiguriert ist, um Y Teilprodukte aus den ersten Eingangsdaten und den zweiten Eingangsdaten zu erzeugen, wobei jedes der Y Teilprodukte X Bit-Elemente beinhaltet, und die erste Berechnungsschaltung konfiguriert ist, um (X+Y-1) von Summen von Teilprodukten durch Addieren jeder Spalte der Y Teilprodukte zu erzeugen.

13. System nach einem der Ansprüche 7-12, wobei die Transpositionsschaltung konfiguriert ist, um für jede aufeinanderfolgende Zeile eine modifizierte Summe von Teilprodukten durch Verschieben nach Links der Vielzahl von Bit-Elementen der zweiten Ausgangsdaten um 1 aus einer vorherigen Zeile und Platzieren einer "0" an einer undefinierten Stelle zu erzeugen.

14. System nach Anspruch 13, wobei die zweite Rechenschaltung konfiguriert ist, um ein Produkt der ersten Eingangsdaten und der zweiten Eingangsdaten durch Addition zweier Termini der modifizierten Summe von Teilprodukten zu erzeugen.

15. Nichtflüchtige, von einem Computer lesbare Programmspeichervorrichtung, die greifbar ein vom Computer ausgeführtes Programm von Anweisungen verkörpert, um ein Verfahren zum Durchführen einer Hochgeschwindigkeitsarithmetik-Operation mit doppelter Genauigkeit in einer integrierten Schaltung durchzuführen, wobei das Verfahren umfasst:
Empfangen von ersten Eingangsdaten und zweiten Eingangsdaten, wobei die ersten Eingangsdaten eine erste Vielzahl von Bits beinhalten und die zweiten Eingangsdaten eine zweite Vielzahl von Bits beinhalten;
Erzeugen von ersten Ausgangsdaten durch Ausführen einer ersten logischen Operation auf jedem der empfangenen ersten Eingangsdaten und zweiten Eingangsdaten, wobei die ersten Ausgangsdaten eine Vielzahl von Skalarprodukten der ersten Vielzahl von Bits und der zweiten Vielzahl von Bits beinhalten;
zeilenweises Anordnen der Vielzahl von Skalarprodukten;
Erzeugen von zweiten Ausgangsdaten durch Ausführen einer ersten arithmetischen Operation auf der Vielzahl von zeilenweise angeordneten Skalarprodukten, wobei die zweiten Ausgangsdaten eine Vielzahl von Bit-Elementen beinhalten;
Durchführen einer Transpositionsoperation an der Vielzahl von Bit-Elementen der zweiten Ausgangsdaten, durch Anordnen die niedrigstwertigen Bits, LSBs, der Vielzahl von Bit-Elementen und der höchstwertigen Bits, MSBs, der Vielzahl von Bit-Elementen in aufeinanderfolgenden Zeilen in einer vordefinierten Weise; und
Erzeugen der endgültigen Ausgangsdaten durch Durchführen einer zweiten arithmetischen Operation auf die transponierte Vielzahl von Bit-Elementen.

## Revendications

1. Procédé de réalisation d'une opération arithmétique à grande vitesse et à double précision dans un circuit intégré, comprenant :
la réception, depuis un ou plusieurs circuits de registre, de premières données d'entrée et de secondes données d'entrée, dans lequel les premières données d'entrée incluent une première pluralité de bits et les secondes données d'entrée incluent une seconde pluralité de bits ;
la génération de premières données de sortie par la réalisation d'une première opération logique sur chacune des premières données d'entrée reçues et des secondes données d'entrée reçues, dans lequel les premières données de sortie incluent une pluralité de produits scalaires de la première pluralité de bits et de la seconde pluralité de bits ;
l'agencement de la pluralité de produits scalaires de manière ligne par ligne ;
la génération de secondes données de sortie par la réalisation d'une première opération arithmétique sur la pluralité de produits scalaires agencés ligne par ligne, dans lequel les secondes données de sortie incluent une pluralité d'éléments binaires ;
la réalisation d'une opération de transposition sur la pluralité d'éléments binaires des secondes données de sortie en agençant les bits de poids faible, LSB, et les bits de poids fort, MSB, de la pluralité d'éléments binaires en lignes successives d'une manière prédéfinie ; et
la génération de données de sortie finales par la réalisation une seconde opération arithmétique sur la pluralité transposée d'éléments binaires.

2. Procédé selon la revendication 1,
dans lequel la première opération logique est une opération ET bit à bit, et
dans lequel l'opération ET bit à bit est réalisée sur chaque bit des premières données d'entrée et des secondes données d'entrée.

3. Procédé selon la revendication 1 ou la revendication 2,
dans lequel la première opération arithmétique est une opération d'addition réalisée sur la pluralité de produits scalaires agencés ligne par ligne, et
chacun de la pluralité d'éléments binaires est généré comme une addition de la pluralité correspondante de produits scalaires.

4. Procédé selon une quelconque revendication précédente,
dans lequel la seconde opération arithmétique correspond à une opération d'addition, et
dans lequel l'opération d'addition est réalisée simultanément sur la pluralité transposée correspondante d'éléments binaires.

5. Procédé selon une quelconque revendication précédente, dans lequel les un ou plusieurs circuits de registre génèrent des premières données d'entrée et des secondes données d'entrée sur la base de signaux vidéo et/ou de trames d'image dans les signaux vidéo reçus par un processeur d'affichage.

6. Procédé selon une quelconque revendication précédente, dans lequel la génération de premières données de sortie inclut le codage de Booth de bits des secondes données d'entrée.

7. Système permettant de réaliser une opération arithmétique à grande vitesse et à double précision pour un circuit intégré, comprenant :
un ou plusieurs circuits de registre configurés pour générer des premières données d'entrée et des secondes données d'entrée, dans lequel les premières données d'entrée incluent une première pluralité de bits et les secondes données d'entrée incluent une seconde pluralité de bits ;
un premier circuit logique configuré pour :
générer des premières données de sortie par la réalisation une première opération logique sur chacune des premières données d'entrée reçues et des secondes données d'entrée reçues, dans lequel les premières données de sortie incluent une pluralité de produits scalaires de la première pluralité de bits et de la seconde pluralité de bits ; et
agencer la pluralité de produits scalaires de manière ligne par ligne ;
un premier circuit de calcul configuré pour générer des secondes données de sortie par la réalisation d'une première opération arithmétique sur la pluralité de produits scalaires agencés ligne par ligne, dans lequel les secondes données de sortie incluent une pluralité d'éléments binaires ;
un circuit de transposition configuré pour réaliser une opération de transposition sur la pluralité d'éléments binaires des secondes données de sortie en agençant les bits de poids faible, LSB, et les bits de poids fort, MSB, de la pluralité d'éléments binaires en lignes successives d'une manière prédéfinie ; et
un second circuit de calcul configuré pour générer des données de sortie finales par la réalisation d'une seconde opération arithmétique sur la pluralité transposée d'éléments binaires.

8. Système selon la revendication 7,
dans lequel la première opération logique est une opération ET bit à bit, et
dans lequel le premier circuit logique est configuré pour réaliser l'opération ET bit à bit sur chaque bit des premières données d'entrée et des secondes données d'entrée.

9. Système selon la revendication 7 ou la revendication 8,
dans lequel la première opération arithmétique est une opération d'addition, et
dans lequel le premier circuit de calcul est configuré pour réaliser l'opération d'addition sur la pluralité de produits scalaires agencés ligne par ligne, et chacun de la pluralité d'éléments binaires est généré comme une addition de la pluralité correspondante de produits scalaires.

10. Système selon l'une quelconque des revendications 7-9,
dans lequel la seconde opération arithmétique est une opération d'addition, et
dans lequel le second circuit de calcul est configuré pour réaliser simultanément l'opération d'addition sur la pluralité transposée correspondante d'éléments binaires.

11. Système selon l'une quelconque des revendications 7-10, dans lequel les données de sortie finales sont un produit de multiplication des premières données d'entrée et des secondes données d'entrée, et le système inclut en outre un ou plusieurs circuits de registre configurés pour recevoir les données de sortie finales.

12. Système selon l'une quelconque des revendications 7-11, dans lequel les premières données d'entrée incluent un nombre X de bits, les secondes données d'entrée incluent un nombre Y de bits, le premier circuit logique est configuré pour générer un nombre Y de produits partiels à partir des premières et secondes données d'entrée, chacun du nombre Y de produits partiels inclut un nombre X d'éléments binaires, et le premier circuit de calcul est configuré pour générer un nombre (X+Y-1) de sommes de produits partiels en additionnant chaque colonne du nombre Y de produits partiels.

13. Système selon l'une quelconque des revendications 7-12, dans lequel le circuit de transposition est configuré pour générer, pour chaque ligne successive, une somme modifiée de produits partiels en décalant vers la gauche la pluralité d'éléments binaires des secondes données de sortie de 1 de plus par rapport à une ligne précédente, et placer un « 0 » à un emplacement indéfini.

14. Système selon la revendication 13, dans lequel le second circuit de calcul est configuré pour générer un produit des premières données d'entrée et des secondes données d'entrée en additionnant deux termes de la somme modifiée de produits partiels.

15. Dispositif de stockage non transitoire de programme lisible par un ordinateur, incorporant matériellement un programme d'instructions exécuté par l'ordinateur pour réaliser un procédé de réalisation d'une opération arithmétique à grande vitesse et à double précision dans un circuit intégré, le procédé comprenant :
la réception de premières données d'entrée et de secondes données d'entrée, dans lequel les premières données d'entrée incluent une première pluralité de bits et les secondes données d'entrée incluent une seconde pluralité de bits ;
la génération de premières données de sortie par la réalisation d'une première opération logique sur chacune des premières données d'entrée reçues et des secondes données d'entrée reçues, dans lequel les premières données de sortie incluent une pluralité de produits scalaires de la première pluralité de bits et de la seconde pluralité de bits ;
l'agencement de la pluralité de produits scalaires de manière ligne par ligne ;
la génération de secondes données de sortie par la réalisation d'une première opération arithmétique sur la pluralité de produits scalaires agencés ligne par ligne, dans lequel les secondes données de sortie incluent une pluralité d'éléments binaires ;
la réalisation d'une opération de transposition sur la pluralité d'éléments binaires des secondes données de sortie en agençant les bits de poids faible, LSB, et les bits de poids fort, MSB, de la pluralité d'éléments binaires en lignes successives d'une manière prédéfinie ; et
la génération de données de sortie finales par la réalisation une seconde opération arithmétique sur la pluralité transposée d'éléments binaires.
